(19) Europäisches Patentamt

European Patent Office

Office européen des brevets

(11) Numéro de publication : **0 540 550 B1**

# (12) FASCICULE DE BREVET EUROPEEN

(45) Date de publication du fascicule du brevet :
**27.07.94 Bulletin 94/30**

(51) Int. Cl.⁵ : **H02K 37/02,** H02K 29/00,
H02K 1/06, H02K 19/10

(21) Numéro de dépôt : **91912619.3**

(22) Date de dépôt : **28.06.91**

(86) Numéro de dépôt international :
**PCT/FR91/00518**

(87) Numéro de publication internationale :
**WO 92/00628 09.01.92 Gazette 92/02**

(54) MACHINE DYNAMO-ELECTRIQUE A SECTEURS A FLUX TRANSVERSAUX.

(30) Priorité : **02.07.90 FR 9008340**

(43) Date de publication de la demande :
**12.05.93 Bulletin 93/19**

(45) Mention de la délivrance du brevet :
**27.07.94 Bulletin 94/30**

(84) Etats contractants désignés :
**CH DE ES FR GB IT LI**

(56) Documents cités :
**DE-A- 2 302 323**
**DE-A- 2 727 450**
**FR-A- 2 203 212**
**US-A- 4 223 255**

(73) Titulaire : **RADIO-ENERGIE S.A.**
**16, Avenue Carnot**
**F-91300 Massy (FR)**

(72) Inventeur : **Koehler, Gérard Noel**
**46 rue de Sèvres**
**F-92410 Ville d'Avray (FR)**

(74) Mandataire : **Keib, Gérard**
**Bouju Derambure (Bugnion) S.A.**
**38, avenue de la Grande Armée**
**F-75017 Paris (FR)**

EP 0 540 550 B1

# Description

La présente invention concerne une machine dynamo-électrique tournante telle qu'un moteur à réluctance variable, comprenant un circuit magnétique statorique muni de bobinages et un circuit magnétique rotorique.

La présente invention concerne également un procédé de fabrication de secteurs magnétiques convenant pour une telle machine.

Le circuit magnétique statorique peut être soit à l'intérieur du circuit magnétique rotorique, comme dans le FR-A-2329097 qui décrit un moteur-roue dans lequel les phases électriques sont réparties angulairement autour de l'axe de rotation Z, soit à l'extérieur comme dans le FR-A-2203212 selon lequel les structures monophasées sont juxtaposées suivant l'axe de rotation Z.

Si les circuits magnétiques sont constitués par des empilages suivant l'axe Z de tôles minces, dans les deux cas la découpe de ces tôles nécéssite des outillages importants et entraine des pertes de matière. En outre, dans le cas du FR-A-2203212, le flux est obligé de passer d'une tôle à l'autre en traversant des réluctances parasites.

Le DE-A-2302323 décrit également des structures juxtaposées. Le circuit magnétique statorique et le circuit magnétique rotorique sont réalisés chacun par un assemblage de 8 secteurs angulaires indépendants constitués chacun par des tôles dont le plan passe sensiblement par l'axe du moteur. Les secteurs statoriques ont une forme en U et chevauchent un bobinage de phase et les secteurs rotoriques sont rectangulaires. Il y a peu de perte de matière, il n'y a plus de réluctance de joint et le trajet du flux est le plus court possible.

Cependant, pour avoir des sections de fer suffisantes, on est amené à avoir un paquet de tôles par secteur. Il est aussi préférable d'avoir une surface d'entrefer peu allongée de façon à diminuer son périmètre le long duquel se forment des flux de franges peu efficaces. La fermeture par recouvrement d'un entrefer se fait alors tôle par tôle, brusquement pour chaque tôle, au lieu de se faire simultanément pour toutes les tôles et progressivement pour chacune d'elles. Il en résulte des pertes fer considérables, le flux devant s'établir brusquement pour chaque tôle et passer d'une tôle à sa voisine pour s'épanouir.

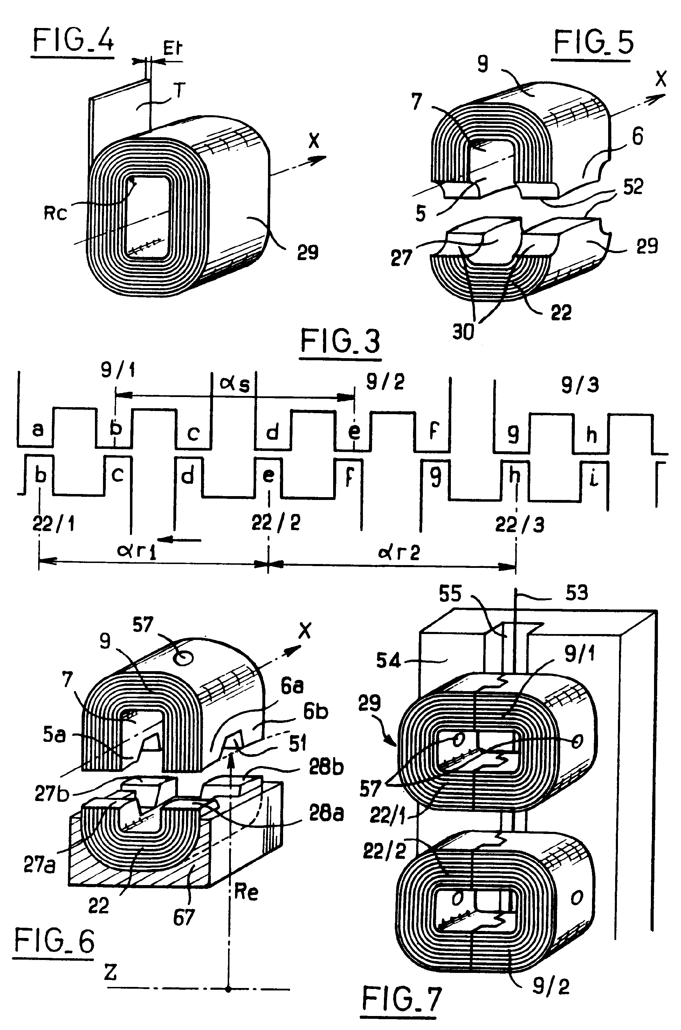

Le DE-A-2727450 décrit un moteur synchrone ou pas-à-pas composé de plusieurs structures monophasées juxtaposées coaxialement à un axe de rotation. Chaque structure comprend suivant les figures 6 et 7:

- un circuit magnétique statorique constitué par un assemblage de secteurs angulaires statoriques disposés en couronne autour de l'axe de rotation, chaque secteur ayant, vu selon une direction tangentielle à l'axe de rotation un profil en forme de "U" ayant deux bras, l'ensemble des bras des secteurs faisant apparaître aux extrémités libres de chaque ensemble de bras une rangée de dents statoriques;
- un bobinage statorique coaxial avec l'axe de rotation et logé à l'intérieur des profilés en U du circuit magnétique statorique;
- un circuit magnétique rotorique faisant apparaître deux rangées de dents rotoriques faisant face chacune à une rangée de dents statoriques de façon à constituer deux rangées annulaires d'entrefers.

Si les aimants permanents 19 et 20 étaient supprimés, on aurait un fonctionnement à réluctance variable.

Selon ce document, les circuits magnétiques sont en matériau magnétique doux, sous forme frittée ou massive avec des joints. Dans les deux cas, il en résulte des pertes fer importantes. De plus, les pièces frittées entrainent des frais d'outillages et une limitation de la taille des moteurs.

Pour pouvoir fonctionner à des vitesses donc à des fréquences de commutation élevées, il est souhaitable de pouvoir utiliser des tôles de faible épaisseur et à grains orientés. Or il est difficile de mettre en paquet des tôles de par exemple 0,1 mm d'épaisseur qui manquent de rigidité. Des rivets d'assemblage, qui doivent être isolés, font perdre de la section de fer et ne permettent pas d'avoir un empilement serré des tôles sur toute leur surface. De plus, l'orientation privilégiée des grains ne peut pas correspondre partout au passage du flux qui change de direction. Enfin l'assemblage de ces tôles est onéreux et risque d'abîmer leur péllicule isolante.

On connait à ce sujet d'après le US-A-4223255 un noyau de circuit magnétique en forme de C constitué par un assemblage de bandes de tôles à haute perméabilité, doublement cambrées. Ces noyaux sont utilisés dans le stator d'un moteur pas-à-pas à aimant permanent qui ne fonctionne pas par variation de réluctance. De plus, les extrémités de ces noyaux sont situées dans un même plan perpendiculaire à l'axe de rotation et font face à des aimants permanents.

Ce document n'est donc pas adapté à une utilisation dans un moteur à réluctance variable dans la mesure où ces moteurs ont besoin de dents dans des entrefers cylindriques entre un stator et un rotor. Par ailleurs, ce document ne donne pas d'indications concernant le procédé d'assemblage de ces bandes de tôle.

Le but de la présente invention est de remédier aux inconvénients cités ci-dessus.

La machine dynamo-électrique à réluctance variable qui fait l'objet de l'invention comprend plusieurs structures juxtaposées coaxialement à un axe de rotation Z, chaque structure comprenant un circuit magnétique statorique et un circuit magnétique rotorique concentriques l'un à l'autre, le circuit magnétique statorique étant constitué par un assemblage de secteurs angulaires statoriques disposés en couronne autour de l'axe de rotation Z et ayant, vu selon une direction tangentielle à l'axe de rotation Z, un profil en forme d'U ayant deux bras, l'ensemble des bras des secteurs statoriques faisant apparaître aux extrémités libres de chaque ensemble de bras une rangée de dents statoriques faisant face à une autre rangée de dents appartenant au circuit magnétique rotorique de façon à constituer deux rangées d'entrefers de forme annulaire, un bobinage statorique 15 de forme toroïdal concentrique à l'axe de rotation Z étant logé à l'intérieur des profils en forme d'U.

Le circuit magnétique rotorique peut aussi être constitué par un assemblage d'une pluralité de secteurs angulaires rotoriques disposés en couronne autour de l'axe de rotation.

Une boucle magnétique élémentaire d'une structure est constituée par deux entrefers de rangées différentes, ayant sensiblement même calage angulaire, réunis par les secteurs statoriques et rotoriques, cette boucle étant traversée par le bobinage statorique.

Les positions angulaires de fermeture des entrefers de chaque structure sont angulairement décalées par rapport à celles des autres structures.

Dans le cas d'un moteur à réluctance variable, les bobinages statoriques des différentes structures sont connectés séquentiellement sous la commande de moyens de commutation en fonction de la position du rotor.

Les ampèretours dans les bobinages provoquent un flux ayant une direction transversale à la direction locale du mouvement.

Suivant l'invention, les secteurs angulaires statoriques et de préférence également les secteurs rotoriques sont des arceaux constitués chacun par un empilage de bandes de tôle magnétique cintrées suivant différents rayons autour d'axes de cintrage dont la direction est transversale à l'axe de rotation. De plus, les dents statoriques et de préférence rotoriques à surfaces d'entrefer cylindriques sont constituées par une partie des tôles. Enfin, dans lesdites dents, les tôles s'étendent dans des plans sensiblement perpendiculaires à l'axe de rotation.

De préférence, les bandes de tôles sont obtenues à partir d'une tôle magnétique mince à grains orientés dont l'orientation est transversale à la direction des axes de cintrage de façon que l'orientation des grains corresponde en tous points à la direction de passage du flux. De plus, les plus petits rayons de cintrage sont supérieurs à six fois l'épaisseur de la tôle.

Selon un autre aspect de l'invention, le procédé pour réaliser des arceaux de circuit magnétique, notamment pour une machine selon le premier aspect, est caractérisé en ce qu'on forme un anneau par enroulement et collage d'une bande à largeur constante en tôle magnétique, puis on sectionne l'anneau en deux régions espacées circonférentiellement de manière à obtenir deux arceaux.

Il n'est pas nécéssaire d'avoir recours à des rivets et l'enroulement est fait sous tension sur un mandrin donnant un empilement très serré des tôles.

Le sectionnement peut être réalisé simplement par un outil à coupe plane en prévoyant un usinage tel qu'une rectification cylindrique après assemblage.

Il peut aussi être réalisé au moyen d'un dispositif à électro-érosion à fil à trajet programmé, ledit fil restant perpendiculaire à la direction d'axe de cintrage de l'anneau.

Dans ce cas, on peut sectionner plusieurs anneaux simultanément.

Enfin, l'invention prévoit le cas où le circuit magnétique rotorique est le siège d'une source de force magnétomotrice rotorique, constituée soit par un bobinage rotorique de forme toroïdale logé dans une gorge, soit par des aimants permanents intercalés chacun dans une coupure d'un arceau rotorique.

D'autres particularités et avantages de l'invention apparaîtront dans la description ci-après.

Aux dessins annexés, donnés à titre non limitatifs:

la figure 1 est une coupe partielle d'un moteur à trois structures A,B et C coupées dans des plans axiaux différents;

la figure 2 est une coupe partielle radiale de la structure B de la figure 1;

la figure 3 est un diagramme de calage angulaire d'arceaux;

la figure 4 est une vue en perspective d'un anneau enroulé et collé à partir d'une bande de tôle;

la figure 5 est une vue semblable à la figure 4, après sectionnement faisant apparaître une paire d'arceaux;

la figure 6 est une vue semblable à la figure 5, avec deux paires d'entrefers et un surmoulage individuel;

la figure 7 est une vue en perspective d'un moyen de sectionnement des anneaux;

la figure 8 est une vue en coupe et perspective partielle d'un moyen d'assemblage des arceaux;

la figure 9 est une vue en coupe axiale d'un mode de réalisation avec bobinage rotorique;

la figure 10 est une vue en coupe axiale d'un mode de réalisation à arceaux rotoriques munis chacun d'un aimant permanent;

la figure 11 est une vue en perspective d'une plaque polaire, et

la figure 12 représente schématiquement des groupes de structures.

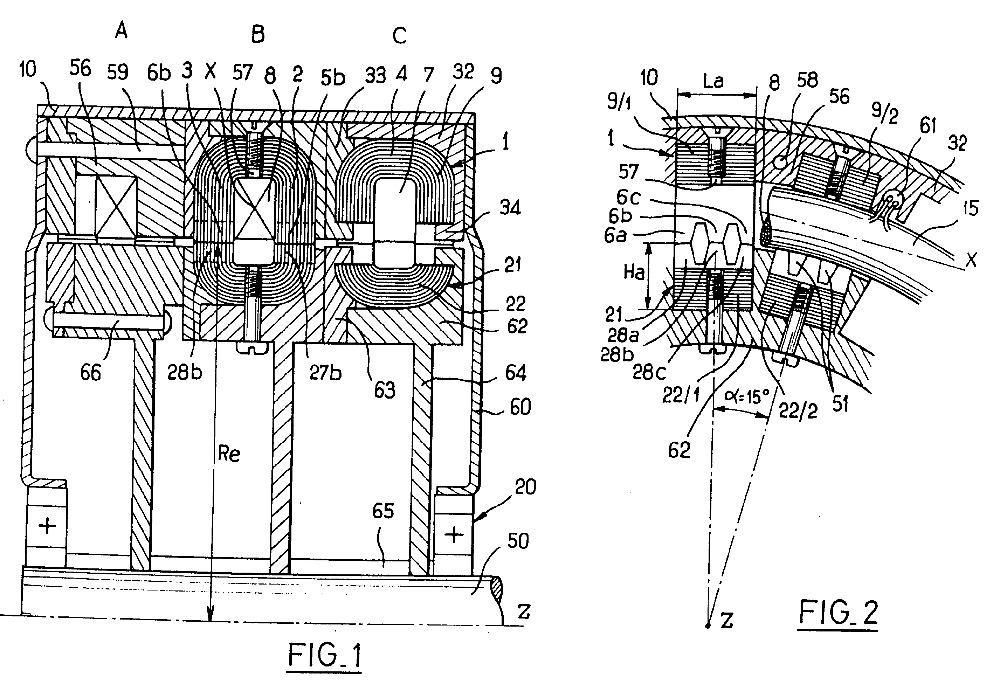

La machine représentée en coupe partielle sur la figure 1 est constituée par la juxtaposition coaxialement à un axe de rotation Z de trois structures A,B et C comprenant chacune:

- un circuit magnétique statorique 1 ayant une section en forme d'U dont l'axe de cintrage a une direction X perpendiculaire à l'axe Z, ayant deux bras 2,3 réunis par le fond 4 de l'U. Les bras se terminent par des dents 5,6 à la distance Re de l'axe Z (voir structure B centrale coupée au niveau des dents);
- un bobinage statorique comportant des conducteurs 8 logés à l'intérieur de l'U dans une gorge 7 (voir structure C coupée hors des dents, les conducteurs 8 n'étant pas représentés);
- et un circuit magnétique rotorique 21, ici intérieur au circuit magnétique statorique 1 et mobile en rotation autour de l'axe Z. Ce circuit, également en forme d'U mais moins profond, se termine par des dents 27,28 en nombre égal au nombre des dents statoriques 5,6 et leurs faisant face (indice b sur la figure 1).

Des moyens de rotation 20 tels que des roulements sont prévus pour porter un arbre 50.

Sur la figure 2, on voit que les conducteurs actifs 8 constituent un bobinage statorique 15 de forme toroïdale dont une partie seule est représentée.

On voit aussi que le circuit magnétique statorique 1 et le circuit magnétique rotorique 21 sont constitués chacun par un assemblage de secteurs angulaires, respectivement statoriques et rotoriques.

Suivant l'invention, les secteurs statoriques sont des arceaux statoriques 9 constitués chacun par un empilage de bandes de tôle magnétique T, cintrées suivant différents rayons et emboîtées les unes dans les autres, les cintrages étant faits suivant des axes de cintrage dont la direction X est perpendiculaire à l'axe de rotation Z.

Il en est de même pour les secteurs rotoriques qui sont des arceaux rotoriques 22.

Pour une position angulaire donnée, on forme ainsi au moins deux entrefers 5-27 et 6-28 qui sont directement réunis par deux faisceaux de tôles cambrées sans joint et avec un trajet le plus court possible, les deux entrefers ayant de préférence le même calage angulaire. De plus, chaque tôle est attaquée progressivement, permettant à son flux de s'épanouir dans l'épaisseur de la tôle sans avoir à passer dans une tôle voisine.

Les parties des tôles T constituant les dents 5,6,27 et 28 sont dans des plans de préférence perpendiculaires à l'axe de rotation Z. Autrement dit, les creux de denture n'empiètent pas sur le fond de l'U. Ceci minimise la perméance d'un entrefer ouvert.

Les entrefers sont répartis en deux rangées 5a-27a, 5b-27b, 5c-27c.. et 6a-28a, 6b-28b, 6c-28c.. ayant de préférence même rayon Re.

Seuls les arceaux statoriques 9/1 et 9/2 et rotoriques 22/1 et 22/2 sont représentés ici sur un total de 24 arceaux par circuit magnétique, avec entre arceaux un angle $\alpha$ égal à 15 degrés. Le nombre Na d'arceaux par circuit magnétique est assez grand pour que la ligne brisée des fonds de gorges 7 se rapproche d'un cercle.

Le nombre Nd de dents d'une même rangée d'un arceau est ici égal à 3, repérées a,b et c en faisant apparaître des creux de denture 51. Les deux rangées d'entrefer d'une même structure se ferment simultanément.

Les faces latérales des arceaux, définies par les bords latéraux des tôles, sont parallèles. Le creux entre deux dents d'arceaux voisins est constitué par l'espace situé entre les arceaux de façon que le pas dentaire soit sensiblement constant. Pour que lesdites faces latérales des arceaux soient parallèles même au niveau de la denture, il faut remplir la condition:

$$La = 2.\pi.Re.(Nd+Rk-1)/Nd.Na \text{ dans laquelle}$$

- La est la longueur d'un arceau parallèlement à la direction d'axe de cintrage
- Nd est le nombre de paires de dents par arceau
- Na est le nombre d'arceaux d'un même circuit magnétique
- Re est le rayon d'entrefer
- Rk est le rapport cyclique de denture (rapport d'un arc de dent au pas dentaire).

De préférence, Rk est compris entre 0,34 et 0,46 pour optimiser les variations de flux.

Pour éviter d'avoir à écorner les angles des arceaux situés près de l'axe Z, il faut remplir la condition:

$$Ha < Re-La.Na/2.\pi \text{ dans laquelle}$$

-Ha est la hauteur de ces arceaux.

L'usinage des dents est fait ici dans une direction parallèle aux faces latérales de l'arceau, en faisant apparaître pour chaque dent un bord d'attaque 52 visible sur la figure 5. Cet usinage peut aussi être fait pour un circuit magnétique avec un léger angle de façon que, pour chaque paire de dents statorique et rotorique 5-27 et 6-28 voisines, les bords d'attaque 52 fassent entre eux un léger angle en introduisant un effet dit de "skewing".

Cet effet peut aussi être obtenu en inclinant légèrement la direction X de l'axe de cintrage de chaque arceau rotorique 22 par rapport à un plan perpendiculaire à l'axe de rotation Z.

Enfin, on peut éviter la fermeture synchrone des entrefers d'une même structure, cause d'à-coup de couple et de risque de resonance. L'assemblage angulaire des arceaux permet en effet d'avoir des angles $\alpha s$ entre arceaux statoriques ou $\alpha r$ rentre arceaux rotoriques variant légèrement. Cependant, pour ne pas avoir alors simultanément un entrefer qui se ferme et un autre entrefer qui s'ouvre, il faut que les arcs de dents d'un circuit magnétique soient plus grands que les arcs de l'autre circuit, c'est à dire que le rapport cyclique de denture Rks du stator soit différent de celui Rkr du rotor. De préférence, Rks>Rkr pour tenir compte des flux de fuite. La différence Rks-Rkr impose des limites aux variations de αr pour qu'on n'ait pas simultanément un entrefer fermé en train de s'ouvrir et un autre entrefer finissant de se fermer. Avec l'exemple de la figure 2, avec Rks=0,45 et Rkr=0,35, les variations de αr peuvent atteindre 6,6%. Les variations d'un arceau à son voisin sont de préférence aléatoires, le total des variations étant évidemment nul sur un tour. Le diagramme de la figure 3 donne un exemple de variations de αr. On voit qu'un entrefer tel que b de l'arceau 9/1 avec c de l'arceau 22/1 a fini de se fermer avant que l'entrefer c de 9/1 avec d de 22/2 ne commence à s'ouvrir.

On constate sur cet exemple que la longueur d'une dent parallèlement à l'axe de rotation Z n'est que 3 fois supérieure à l'arc de la largeur, ce qui minimise les effets de bords tandis que la longueur totale des bords d'attaque 52 des dents d'un circuit magnétique, qui conditionne le couple de démarrage, est 40 fois supérieure à la longueur axiale du stator 1.

Les arceaux statoriques 9 proviennent de préférence du sectionnement d'un anneau 29 représenté sur la figure 4, ce sectionnement pouvant également fournir un arceau rotorique 22. Cet anneau 29 est obtenu par un enroulement et un collage tel qu'une imprégnation sous vide d'une bande à largeur constante de la tôle magnétique T qui est mince, à grains orientés et à faces isolées. Sur la figure 4, cet anneau est représenté en fin d'enroulement. L'orientation des grains, résultant du laminage, est dans le sens de la longueur de la bande, donc perpendiculaire à la direction X de l'axe de cintrage et d'enroulement de la tôle. L'ouverture intérieure de l'anneau a de préférence une forme rectangulaire à angles arrondis pour gagner de la section de bobinage sans augmenter la hauteur. Mais le plus petit rayon de cintrage Rc résultant de l'enroulement est de préférence supérieur à 6 fois l'épaisseur Et de la tôle T de façon à ne pas dégrader la perméabilité de la tôle.

D'une manière générale, le sectionnement est effectué en deux régions espacées circonférentiellement. Si l'on part d'arceaux sectionnés selon un plan, cette surface peut facilement devenir cylindrique par une opération de rectification effectuée après assemblage des arceaux.

La formation des dents peut se faire par enlèvement de matière par fraisage ou rectification et il y a peu de perte de matière.

L'opération de sectionnement peut aussi être réalisée par un usinage au moyen d'un dispositif d'électro-érosion à fil 53, ledit fil restant perpendiculaire à la direction X de l'axe de l'anneau 29 et étant programmé pour décrire un profil à denture cylindrique comme cela est représenté sur la figure 5, où n'apparaît qu'une paire d'entrefers 5-27/6-28. Des entailles 30 permettent de concentrer le flux dans les entrefers. Ce type de sectionnement a l'avantage de ne pas courtcircuiter les tôles et d'être précis.

De préférence, le programme de sectionnement fait apparaître au moins deux paires d'entrefers 5a-27a/6a-28a et 5b-27b/6b-28b, comme représenté sur la ligne 6, de façon à faire apparaître des creux de denture 51.

Comme représenté sur la figure 7, plusieurs anneaux 29 peuvent être sectionnés simultanément. Pour chaque anneau, les extrémités d'une face latérale définie par un bord de la tôle sont pressées contre une électrode 54 disposée parallèlement au fil 53 et ayant une entaille 55 pour accueillir le fil à une extrémité de son trajet de sectionnement sans qu'il touche l'électrode. On voit que le sectionnement des arceaux 9/1, 9/2 est terminé et qu'il reste à enlever les creux de denture des arceaux 22/1, 22/2.

Sur ces arceaux, on constate que l'orientation privilégiée des grains correspond en chaque point à la direction de passage de flux. Les pertes fer sont encore réduites par le fait que le flux dans le rotor ne s'inverse pas, ce qui diminue la surface du cycle d'hystérésis.

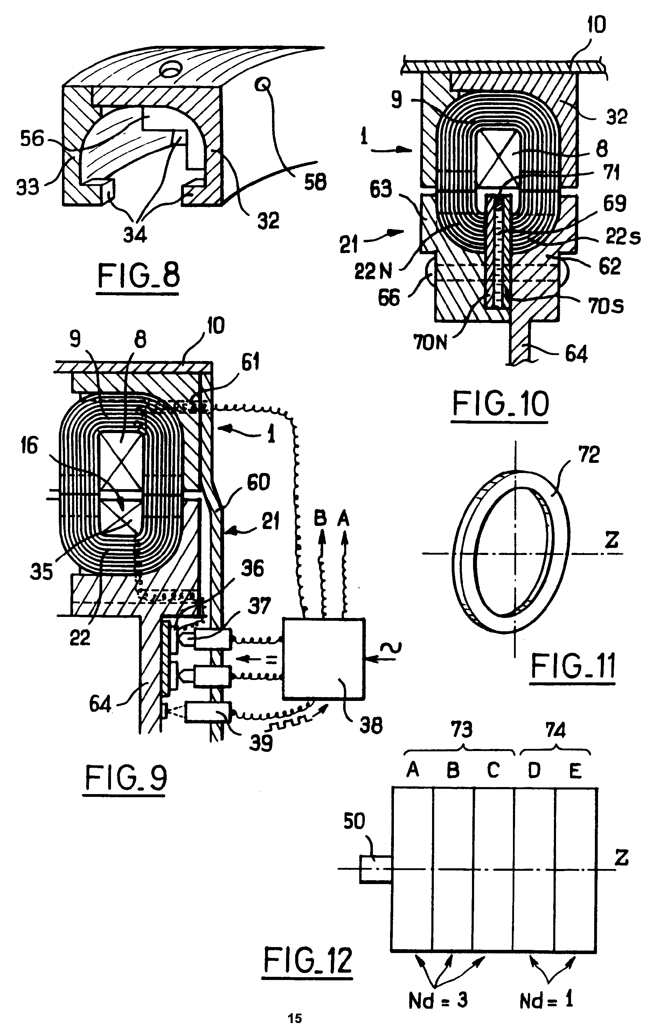

Sur la figure 8, on a représenté un moyen d'assemblage des arceaux consistant pour le stator 1 en une couronne 32 à section en forme de L ouverte vers l'entrefer et sur une face latérale et en un couvercle 33 susceptible de s'emboiter axialement sur la couronne en enchassant les arceaux 9. A cet effet, la courbure extérieure de l'arceau 9 se retrouve sensiblement sur une section droite intérieure de l'ensemble emboîté, entre deux voiles de matière 56. Des ergots 34 pénètrent dans les creux de dents 51 (voir figure 1 structure C coupée entre deux dents).

Chaque arceau peut comporter dans le fond 4 de l'U un trou 57 traversé par un moyen de fixation tel qu'une vis à épaulement de centrage.

Entre les arceaux, des trous 58 traversent les couronnes assemblées au niveau des voiles 56 (voir figure 2) de façon à ce que des tirants 59 permettent de maintenir les couronnes des différentes structures A,B,C assemblées entre des flasques 60 en relation avec une culasse 10 (voir figure 1 structure A coupée entre arceaux).

D'autres trous 61 permettent de faire passer les sorties de bobinage 15 jusqu'à un des flasques 60.

Une autre couronne 62 et un couvercle 63 permettent d'enchasser de même les arceaux rotoriques 22. La couronne rotorique 62 se prolonge vers l'axe Z par un disque 64 qui est emmanché dur sur l'arbre 50.

Ce dernier comporte des cannelures 65 transmettant le couple et permettant de respecter le calage angulaire entre structures. D'autres tirants 66 assemblent un circuit magnétique rotorique 21 (voir figure 1 structure A).

Ces assemblages peuvent être rendus monoblocs par une imprégnation sous vide.

Un autre moyen d'assemblage des arceaux d'un circuit magnétique consiste à surmouler ces arceaux avant rectification.

On peut aussi n'effectuer qu'un surmoulage individuel 67 du dois d'un arceau comme visible en coupe partielle sur l'arceau 22 de la figure 6. Ce surmoulage est accroché aux creux de denture 30,51 et sa forme extérieure se prête à un assemblage en couronne dans une culasse ou sur une jante.

Les structures sont ainsi bien isolées magnétiquement les unes des autres.

Dans le cas où la machine est un moteur à réluctance variable, des moyens de commutation 38 sont prévus pour alimenter les bobinages statoriques 15 par des impulsions de courant continu, constituant ainsi une source de force magnétomotrice statorique (voir figure 9). Ces impulsions sont envoyées pendant les périodes de fermeture par recouvrement des entrefers de la structure considérée, de façon à produire le couple moteur. Lesdites périodes sont repérées par un signal de position du rotor fourni par un capteur 39. Pendant l'ouverture desdits entrefers, les autres structures du moteur fournissent le couple moteur avec un certain recouvrement.

Sur la figure 9, on voit qu'il est facile d'avoir des arceaux rotoriques 22 également pourvus d'une gorge 16 équipée d'un bobinage rotorique 35. Ce bobinage de forme toroïdale peut être alimenté en courant continu par des bagues 36 et balais 37 communs aux structures, en constituant une source de force magnétomotrice rotorique 68.

Comme représenté sur la figure 10, cette source 68 peut aussi provenir d'un aimant permanent 69 intercalé dans une coupure de chaque arceau rotorique 22, donnant deux demi-arceaux 22N et 22S, chacun muni de dents d'une seule rangée 27a,27b.. ou 28a,28b..

Pour respecter le rapport de l'induction des dents d'un demi-arceau à l'induction rémanente de l'aimant permanent 69, l'aire de ce dernier doit être au moins trois fois et de préférence quatre ou cinq fois plus grande que celle des dents. Pour cela, les demi-arceaux 22N et 22S sont relié chacun à une face polaire N,S de l'aimant permanent par l'intermédiaire d'une plaque polaire 70N,70S.

Cet ensemble est maintenu entre les pièces 62 et 63 adaptées à cet effet et assemblées par des tirants 66 individuels pour une structure.

Une entretoise 71 est mise entre les plaques polaires 70 du côté opposé à l'axe de rotation Z pour encaisser l'effet de la force centrifuge sur l'aimant permanent 69.

La coupure peut être dans un plan perpendiculaire à l'axe Z comme sur la figure 10.

Les dimensions de l'aimant permanent sont choisies pour que la réluctance de ce dernier soit de préférence inférieure à la réluctance des entrefers situés dans le trajet de son flux et la nature de l'aimant permanent est choisie pour que le produit de son champ coercitif par son épaisseur donne une force magnétomotrice supérieure à la moitié de celle du bobinage 15.

Pour cela, il est intéressant de choisir un matériau à base de terres rares, dont la poudre est incorporée à un liant plastique pour faciliter la mise en oeuvre.

Si les aimants permanents d'une même structure ont même polarité axiale et si les coupures sont dans un même plan radial, les plaques polaires d'une même polarité 70N,70S d'une même structure peuvent ne constituer qu'une même pièce en forme d'anneau plat 72 représenté sur la figure 11.

Dans le cas d'un moteur équipé de cette source 68, les moyens de commutation 38 et de repérage de position angulaire 39 du circuit magnétique rotorique 21 sont prévus pour alimenter chaque bobinage statorique 15 par des impulsions donnant une force magnétomotrice de même sens que celui de la force magnétomotrice rotorique pendant les périodes motrices de fermeture par recouvrement des entrefers. Les forces magnétomotrices sont alors bien réparties de part et d'autre des entrefers, en minimisant les fuites et en réduisant les pertes cuivre dans le cas des aimants permanents.

De plus, pendant les périodes d'ouverture des entrefers, la force magnétomotrice statorique a de préférence un sens inversé et diminué au lieu d'être supprimée. Les dents se faisant alors partiellement face ont tendance à se placer dans la position où les flux opposés peuvent s'écouler le plus librement, c'est à dire à entrefer ouvert. Il en résulte donc une petite force supplémentaire ainsi qu'une plus rapide décroissance du flux.

Enfin, si les moyens de commutation 38 provoquent une inversion du sens des forces magnétomotrices statoriques par rapport à une marche normale motrice, il en résulte un freinage. Compte tenu de la source magnétomotrice rotorique 68, il est possible de récupérer efficacement l'énergie de freinage, ce qui est particulièrement intéressant dans le cas d'un véhicule alimenté par des accumulateurs.

La machine décrite peut aussi être considérée comme un alternateur: Avec la source de force magnétomotrice 68 à bobinage rotorique 35, un agencement des moyens de commutation 38 et de repérage de position angulaire 39 du circuit magnétique rotorique 21 permet d'alimenter le bobinage rotorique 35 par des courants de sens alternées en synchronisme avec le défilement des dents de façon à recueillir simultanément sur les dents 5,6 des arceaux statoriques 9 un flux d'une direction qui s'inverse à chaque avance d'un pas dentaire. Une force électromotrice alternative est donc induite dans le bobinage statorique 15. Pour un fonctionnement polyphasé, il faut toutefois prévoir un plus grand nombre de bagues et balais.

Il apparaît ainsi que la même machine est capable de fonctionner suivant les besoins en moteur ou en alternateur pour par exemple charger un accumulateur d'un véhicule se déplaçant au moyen d'un moteur thermique et ensuite utiliser la traction électrique pour un déplacement urbain.

Grâce aux dispositions décrites, une gamme de machines peut être créee avec des outillages complémentaires réduits en faisant varier le nombre de structures A,B,C.. par machine, le nombre d'arceaux Na par structure et le nombre de dents Nd par arceau, tout en conservant le même type d'anneau 29.

On peut aussi juxtaposer des groupes de structures, tels que A,B,C pour un groupe 73 et D,E pour un autre groupe 74. Voir figure 12. Chaque groupe a un nombre de dents NaxNd le même pour les différentes structures du groupe et différent de celui des autres groupes. Par exemple Nd=3 pour le premier groupe 71 et Nd=1 pour le deuxième groupe 72 à même nombre d'arceaux Na. De la sorte la machine peut fonctionner avec une plage de vitesse trois fois plus importante et on peut éventuellement déconnecter le premier groupe à partir d'une certaine vitesse. Cette disposition peut aussi permettre de réduire des effets de resonance.

Bien entendu, les positions des arceaux statoriques 9 et rotoriques 22 des figures 1 et 2 peuvent être permutées de façon à avoir un moteur-roue à rotor extérieur, comme cela est connu en soi d'après les figures 1 et 2 du FR-A-2.329.097.

Sans sortir de l'invention, un arceau peut réunir des dents ayant un léger décalage angulaire entre elles autour de l'axe Z, pour rendre progressif l'apparition du flux, ou un décalage égal à un pas dentaire de façon à relier par exemple les dents statoriques 5a et 6b et les dents rotoriques 28b et 27a ou même 28b et 27c.

Enfin, les rayons d'entrefer Re de deux rangées d'entrfers d'une même structure peuvent ne pas être identiques et une rangée d'entrefers peut être remplacée par une réluctance de joint tournant.

## Revendications

1. Machine dynamo-électrique tournante à réluctance variable comprenant plusieurs structures (A,B,C...) juxtaposées coaxialement à un axe de rotation (Z), chaque structure comprenant un circuit magnétique statorique (1) et un circuit magnétique rotorique (21) concentriques l'un à l'autre, le circuit magnétique statorique (1) étant constitué par un assemblage de secteurs angulaires statoriques disposés en couronne autour de l'axe de rotation (Z) et ayant, vu selon une direction tangentielle à l'axe de rotation (Z), un profil en forme d'U ayant deux bras (2,3), l'ensemble des bras des secteurs statoriques faisant apparaître aux extrémités libres de chaque ensemble de bras (2,3) une rangée de dents statoriques (5a,5b,5c../6a,6b,6c..) faisant face à une autre rangée de dents (27a,27b,27c.. /28a,28b,28c..) appartenant au circuit magnétique rotorique (21) de façon à constituer deux rangées d'entrefers (5a-27a, 5b-27../6a-28a, 6b-28b..) de forme annulaire, un bobinage statorique (15) de forme toroïdale concentrique à l'axe de rotation (Z) étant logé à l'intérieur des profils en forme d'U, **caractérisée** en ce que les secteurs angulaires statoriques sont des arceaux (9) constitués chacun par un empilage de bandes de tôle magnétique (T) cintrées suivant différents rayons autour d'axes de cintrage dont la direction (X) est transversale à l'axe de rotation (Z), en ce que les dents statoriques (5,6) à surfaces d'entrefer cylindriques sont constituées par une partie des tôles (T) et en ce que dans les dents (5,6), les tôles (T) s'étendent dans des plans sensiblement perpendiculaires à l'axe de rotation (Z).

2. Machine selon la revendication 1, caractérisée en ce que le circuit magnétique rotorique (21) est constitué par un assemblage, en forme de couronne, de secteurs angulaires qui sont des arceaux (22) constitués chacun par un empilage de bandes de tôle magnétique (T) cintrées suivant différents rayons autour d'axes de cintrage dont la direction (X) est transversale à l'axe de rotation (Z), en ce que les dents rotoriques (27,28) à surfaces d'entrefer cylindriques sont constituées par une partie des tôles (T) et en ce que dans les extrémités des dents rotoriques (27,28), les tôles (T) s'étendent dans des plans sensiblement perpendiculaires à l'axe de rotation (Z).

3. Machine selon la revendication 2, caractérisée en ce qu'une source de force magnétomotrice rotorique (68) est logée dans le circuit magnétique rotorique (21).

4. Machine selon la revendication 3, caractérisée en ce que la source de force magnétomotrice rotorique (68) est constituée par un bobinage rotorique (35) de forme toroïdale logé dans une gorge (16) des arceaux rotoriques (22).

5. Machine selon la revendications 3, caractérisée en ce que la source de force magnétomotrice rotorique (68) est constituée par des aimants permanents (69) intercalés chacun dans une coupure de l'un des arceaux rotoriques (22) donnant deux demi-arceaux (22N,22S), chacun muni de dents (27/28) d'une seule rangée.

6. Machine selon la revendication 5, caractérisée en ce que les faces polaires (N,S) de l'aimant permanent (69) ont une aire au moins trois fois plus grande que l'aire totale des dents d'un demi-arceau (22N,22S) et en ce que les deux demi-arceaux (22N,22S) sont reliés chacun à une face polaire (N,S) de l'aimant permanent (69) par l'intermédiaire d'une plaque polaire (70N,70S).

7. Machine selon la revendication 6, caractérisée en ce que les plaques polaires (70N,70S) reliées à une même polarité (N,S) ne constituent chacune qu'une même pièce en forme d'anneau plat (72).

8. Machine selon l'une des revendications 2 à 7, caractérisée en ce que dans chaque structure la longueur (La) d'un arceau suivant la direction (X) d'axe de cintrage de cet arceau est constante et en ce que la hauteur Ha des arceaux du circuit magnétique situé le plus près de l'axe de rotation (Z), le nombre (Na) d'arceaux constituant le circuit magnétique précité et le rayon (Re) d'entrefer remplissent sensiblement la condition:

$$Ha < Re - La.Na/2.\pi$$

9. Machine selon l'une quelconque des revendications précédentes, caractérisée en ce que les bandes de tôles sont obtenues à partir d'une tôle magnétique mince à grains orientés (T) dont l'orientation est transversale à la direction (X) des axes de cintrage.

10. Machine selon la revendication 9, caractérisée en ce que les plus petits rayons (Rc) de cintrage sont supérieurs à six fois l'épaisseur (Et) de la tôle magnétique (T).

11. Machine selon l'une quelconque des revendications précédentes, caractérisée en ce que chaque bras d'arceau (9;22) comporte au moins deux dents (5a,5b-6a,6b /27a,27b-28a,28b) se succédant circonférentiellement et séparées par un creux de denture (51).

12. Machine selon la revendication 11, caractérisée en ce que la longueur (La) d'un arceau suivant la direction (X) d'axe de cintrage de cet arceau est constante et en ce que le nombre (Nd) de paires de dents par arceau, le nombre (Na) d'arceaux constituant un circuit magnétique, la longueur (La) d'un arceau, le rayon (Re) d'entrefer et le rapport cyclique de denture (Rk) remplissent sensiblement les conditions:

$$La = 2.\pi.Re.(Nd + Rk - 1)/Nd.Na$$
$$0,34 < Rk < 0,46$$

13. Machine selon l'une quelconque des revendications précédentes, caractérisée en ce que les rapports cycliques de denture (Rks,Rkr) du circuit magnétique statorique (1) et du circuit magnétique rotorique (21) sont différents (Rks>Rkr) et en ce que les angles ($\alpha r$) entre arceaux voisins du circuit magnétique (21) ayant le plus petit rapport cyclique de denture (Rkr) varient dans des limites telles qu'on n'ait pas simultanément un entrefer fermé en train de s'ouvrir et un autre entrefer en train de se fermer.

14. Machine selon l'une quelconque des revendications précédentes, chaque dent ayant un bord d'attaque (52), caractérisée en ce que les bords d'attaque (52) de chaque paire de dents statoriques et rotoriques voisines (5-27, 6-28) font entre eux un léger angle.

15. Machine selon l'une quelconque des revendications précédentes, caractérisée en ce que chaque arceau rotorique (22) a une direction d'axe de cintrage (X) légèrement inclinée par rapport à un plan perpendiculaire à l'axe de rotation (Z).

16. Machine selon l'une quelconque des revendications précédentes, caractérisée en ce qu'elle comprend des groupes (73,74) de structures (A,B,C..) juxtaposées, chaque groupe ayant un même nombre de dents (NdxNa) par structure et un groupe ayant un nombre de dents (NdxNa) différent de celui des autres groupes.

17. Machine selon l'une quelconque des revendications précédentes, caractérisée en ce que chaque arceau comporte dans le fond (4) de l'U un trou (57) traversé par un moyen de fixation.

18. Machine selon l'une quelconque des revendications précédentes, la partie d'un arceau opposée aux dents (5,6;27,28) constituant un dos d'arceau, caractérisée en ce qu'un arceau (9,22) est pourvu sur son dos d'un surmoulage individuel (67) accroché aux creux de denture (30,51), dont la forme extérieure se prête à un assemblage en couronne.

19. Procédé pour réaliser des arceaux (9,22) de circuit magnétique, notamment pour une machine selon l'une quelconque des revendications précédentes, caractérisé en ce qu'on forme un anneau (29) par enroulement et collage d'une bande à largeur constante en tôle magnétique (T) puis on sectionne l'anneau en deux régions espacées circonférentiellement de manière à obtenir deux arceaux (9;9,22).

20. Procédé selon la revendication 19, caractérisé en ce que le sectionnement de l'anneau (29) est réalisé au moyen d'un dispositif d'électro-érosion à fil (53) qu'on programme pour suivre un profil de denture, en restant sensiblement perpendiculaire à une direction (X) d'axe de cintrage de l'anneau (29).

21. Procédé selon la revendication 20, caractérisé en ce que le sectionnement est réalisé simultanément sur plusieurs anneaux (29) dont une face définie par un bord de la tôle magnétique est pressée contre une électrode (54) disposée parallèlement au fil( 52) et ayant une entaille (55) dans laquelle se trouve le fil à l'une de ses extrémités de sectionnement.

## Claims

1. A rotary variable-reluctance dynamo-electric machine, comprising a plurality of structures (A, B, C ...) juxtaposed coaxially to an axis of rotation (Z), each structure comprising a magnetic stator circuit (1) and a magnetic rotor circuit (21), said circuits being concentric to one another, the magnetic stator circuit (1) comprising an assembly of angular stator sectors disposed in a ring around the axis of rotation (Z) and, as considered in a direction tangential to the axis of rotation (Z), having a U-shaped profile having two arms (2, 3), the assembly of stator sector arms presenting, at the free ends of each arm (2, 3) assembly, a row of stator teeth (5a, 5b, 5c.../6a, 6b, 6c..) facing another row of teeth (27a, 27b, 27c../28a, 28b, 28c..) belonging to the magnetic rotor circuit (21) so as to form two rows of air gaps (5a-27a, 5b-27b../6a-28a, 6b-28b..) of annular shape, a stator winding (15) of toroidal shape concentric to the axis of rotation (Z) being accommodated inside the U-shaped profiles, characterised in that the angular stator sectors are arches (9) each formed by a stack of strips of magnetic sheet-metal (T) curved to different radii about axes of curvature whose direction (X) is transverse to the axis of rotation (Z), in that the stator teeth (5, 6) having cylindrical air gap surfaces are formed by a part of the metal sheets (T) and in that in the teeth (5, 6) the metal sheets (T) extend in planes substantially perpendicular to the axis of rotation (Z).

2. A machine according according to claim 1, characterised in that the magnetic rotor circuit (21) comprises a ring-shaped assembly of angular sectors which are arches (22) each formed by a stack of strips of magnetic sheet-metal (T) curved to different radii about axes of curvature whose direction (X) is transverse to the axis of rotation (Z), in that the rotor teeth (27, 28) having cylindrical air gap surfaces are formed by some of the metal sheets (T) and in that in the ends of the rotor teeth (27, 28) the metal sheets (T) extend in planes substantially perpendicular to the axis of rotation (Z).

3. A machine according to claim 2, characterised in that a rotor magnetomotive force source (68) is accommodated in the magnetic rotor circuit (21).

4. A machine according to claim 3, characterised in that the rotor magnetomotive force source (68) comprises a rotor winding (35) of toroidal shape accommodated in a groove (16) in the rotor arches (22).

5. A machine according to claim 3, characterised in that the rotor magnetomotive force source (68) comprises permanent magnets (69) interposed each in a cut-out in one of the rotor arches (22) giving two semi-arches (22N, 22S), each provided with teeth (27/28) of a single row.

6. A machine according to claim 5, characterised in that the pole surfaces (N, S) of the permanent magnet (69) have an area at least three times greater than the total area of the teeth of a semi-arch (22N, 22S) and in that the two semi-arches (22N, 22S) are each connected to a pole surface (N, S) of the permanent magnet (69) by means of a pole plate (70N, 70S).

7. A machine according to claim 6, characterised in that the pole plates (70N, 70S) connected to the same polarity (N, S) each form only one and the same piece in the form of a flat ring (72).

8. A machine according to any one of claims 2 to 7, characterised in that in each structure the length (La) of an arch in the direction (X) of the axis of curvature of said arch is constant and in that the height (Ha) of the arches of the magnetic circuit situated closest to the axis of rotation (Z), the number (Na) of arches forming the said magnetic circuit, and the radius (Re) of the air gap substantially satisfy the condition:
$$Ha < Re - La.Na/2.\pi.$$

9. A machine according to any one of the preceding claims, characterised in that the sheet-metal strips are produced from a thin oriented-grain magnetic metal sheet (T), the grain orientation being transverse to the direction (X) of the axes of curvature.

10. A machine according to claim 9, characterised in that the smallest radii (Rc) of curvature are greater than six times the thickness (Et) of the magnetic metal sheet (T).

11. A machine according to any one of the preceding claims, characterised in that each arch arm (9; 22) comprises at least two circumferentially successive teeth (5a, 5b-6a, 6b/27a, 27b-28a, 28b) separated by a toothing cavity (51).

12. A machine according to claim 11, characterised in that the length (La) of an arch in the direction (X) of the axis of curvature of said arch is constant and in that the number (Nd) of pairs of teeth per arch, the number (Na) of arches forming a magnetic circuit, the length (La) of an arch, the radius (Re) of the air gap and the cyclic toothing ratio (Rk) substantially satisfy the following conditions:

$$La = 2.\pi.Re.(Nd + Rk - 1)/Nd.Na$$
$$0.34 < Rk < 0.46$$

13. A machine according to any one of the preceding claims, characterised in that the cyclic toothing ratios (Rks, Rkr) of the magnetic stator circuit (1) and of the magnetic rotor circuit (21) are different (Rks>Rkr) and in that the angles ($\alpha$r) between adjacent arches of the magnetic circuit (21) having the smallest cyclic toothing ratio (Rkr) vary within limits such that a closed air gap in the process of opening and another air gap in the process of closing do not occur simultaneously.

14. A machine according to any one of the preceding claims, each tooth having a leading edge (52), characterised in that the leading edges (52) of each pair of adjacent stator and rotor teeth (5-27, 6-28) form a small angle with one another.

15. A machine according to any one of the preceding claims, characterised in that each rotor arch (22) has a direction of the axis of curvature (X) slightly inclined in relation to a plane perpendicular to the axis of rotation (Z).

16. A machine according to any one of the preceding claims, characterised in that it comprises groups (73, 74) of juxtaposed structures (A, B, C ..) each group having the same number of teeth (NdxNa) per structure and a group having a number of teeth (NdxNa) differing from that of the other groups.

17. A machine according to any one of the preceding claims, characterised in that each arch comprises, in the bottom (4) of the U, a hole (57) through which a fixing means extends.

18. A machine according to any one of the preceding claims, that part of an arch which is remote from the teeth (5, 6; 27, 28) forming an arch back, characterised in that an arch (9, 22) has on its back an individual moulding (67) attached to the toothing cavity (30, 51), the outer shape of which matches a ring assembly.

19. A method of making magnetic circuit arches (9, 22), inter alia for a machine according to any one of the preceding claims, characterised in that a ring (29) is formed by winding and gluing a constant-width strip of magnetic sheet-metal (T), whereupon the ring is cut into two circumferentially spaced zones to give two arches (9; 9, 22).

20. A method according to claim 19, characterised in that the ring (29) is cut by means of an electro-erosion wire device (53), programmed to follow a toothing profile while remaining substantially perpendicular to a direction (X) of the axis of curvature of the ring (29).

21. A method according to claim 20, characterised in that cutting is carried out simultaneously on a plurality of rings (29), of which one surface defined by an edge of the magnetic sheet-metal is pressed against an electrode (54) disposed parallel to the wire (52) and having a notch (56) in which the wire is situated at one of its cutting ends.

**Patentansprüche**

1. Dynamoelektrische Maschine mit variabler Reluktanz, mit mehreren Strukturen (A, B, C ...), die nebeneinander und koaxial zu einer Rotationsachse (Z) angeordnet sind, wobei jede Struktur einen Statormagnetkreis (1) und einen Rotormagnetkreis (21) enthält, die zueinander konzentrisch sind, wobei der Statormagnetkreis (1) durch eine Zusammenfügung von Statorwinkelsektoren gebildet ist, die kranzförmig um die Rotationsachse (Z) herum angeordnet sind und in einer Richtung tangential zur Rotationsachse (Z) gesehen ein U-förmiges Profil mit zwei Schenkeln (2, 3) besitzen, wobei die Baugruppe der Schenkel der Statorsektoren an den freien Enden jeder Baugruppe der Schenkel (2, 3) eine Reihe Statorzähne (5a, 5b, 5c ... / 6a, 6b, 6c ...) aufweist, die einer weiteren Reihe von Zähnen (27a, 27b, 27c ... / 28a, 28b, 28c), die zum Rotormagnetkreis (21) gehören, in der Weise gegenüberliegt, daß zwei Reihen ringförmiger Luftspalte (5a-27a, 5b-27b ... / 6a-28a, 6b-28b ...) gebildet werden, wobei eine torische, zur Rotationsachse (Z) konzentrische Statorwicklung (15) im Inneren des U-förmigen Profils angeordnet ist, **dadurch gekennzeichnet,** daß die Statorwinkelsektoren Bögen (9) sind, die jeweils durch einen Stapel von Streifen aus Magnetblech (T) gebildet sind, die mit verschiedenen Radien um Krümmungsachsen (X) gekrümmt sind, deren Richtung quer zur Rotationsachse (Z) ist, daß die Statorzähne (5, 6) mit zylindrischen Luftspaltflächen durch einen Abschnitt der Bleche (T) gebildet sind und daß die Bleche (T) sich in den Zähnen (5, 6) in zur Rotationsachse (Z) im wesentlichen senkrechten Ebenen erstrecken.

2. Maschine nach Anspruch 1, dadurch gekennzeichnet, daß der Rotormagnetkreis (21) durch eine kranzförmige Zusammenfügung von Winkelsektoren gebildet ist, die Bögen (22) sind, die jeweils durch einen Stapel von Streifen aus Magnetblech (T) gebildet sind, die mit verschiedenen Radien um Krümmungsachsen gekrümmt sind, deren Richtung (X) quer zur Rotationsachse (Z) ist, daß die Rotorzähne (27, 28) mit zylindrischen Luftspaltflächen durch einen Abschnitt der Bleche (T) gebildet sind und daß die Bleche (T) sich in den Enden der Zähne (27, 28) in zur Rotationsachse (Z) im wesentlichen senkrechten Ebenen erstrecken.

3. Maschine nach Anspruch 2, dadurch gekennzeichnet, daß im Rotormagnetkreis (21) eine Rotorquelle (68) einer magnetomotorischen Kraft angeordnet ist.

4. Maschine nach Anspruch 3, dadurch gekennzeichnet, daß die Rotorquelle (68) einer magnetomotorischen Kraft durch eine torische Rotorwicklung (35) gebildet ist, die in einer Nut (16) der Rotorbögen (22) angeordnet ist.

5. Maschine nach Anspruch 3, dadurch gekennzeichnet, daß die Rotorquelle (68) einer magnetomotorischen Kraft durch Permanentmagnete (69) gebildet ist, die jeweils in einen Ausschnitt in einem der Rotorbögen (22) eingesetzt sind, was zwei jeweils mit Zähnen (27/28) einer einzigen Reihe versehene Halbbögen (22N, 22S) ergibt.

6. Maschine nach Anspruch 5, dadurch gekennzeichnet, daß die Polflächen (N, S) des Permanentmagneten (69) ein Flächenausdehnung haben, die wenigstens drei mal größer als die Gesamtflächenausdehnung der Zähne eines Halbbogens (22N, 22S) ist, und daß die beiden Halbbögen (22N, 22S) jeweils über eine Polplatte (70N, 70S) mit einer Polfläche (N, S) des Permanentmagneten (69) verbunden sind.

7. Maschine nach Anspruch 6, dadurch gekennzeichnet, daß die jeweils mit dem gleichen Pol (N, S) verbundenen Polplatten (70N, 70S) ein einziges Teil in Form eines ebenen Ringes (72) bilden.

8. Maschine nach einem der Ansprüche 2 bis 7, dadurch gekennzeichnet, daß in jeder Struktur die Länge (La) eines Bogens entlang der Richtung (X) der Krümmungsachse dieses Bogens konstant ist und daß die Höhe Ha der am nächsten zur Rotationsachse (Z) liegenden Bögen des Magnetkreises, die Anzahl (Na) der den genannten Magnetkreis bildenden Bögen und der Radius (Re) des Luftspaltes im wesentlichen die folgende Bedingung erfüllen:

$$Ha < Re - La \cdot Na / 2 \cdot \pi$$

9. Maschine nach einem der vorhergehenden Ansprüche, dadurch gekennzeichnet, daß die Blechstreifen aus einem dünnen Magnetblech (T) mit gerichteten Körnern erhalten sind, deren Ausrichtung quer zur Richtung (X) der Krümmungsachsen ist.

10. Maschine nach Anspruch 9, dadurch gekennzeichnet, daß die kleinsten Krümmungsradien (Rc) größer als das Sechsfache der Dicke (Et) des Magnetbleches (T) sind.

11. Maschine nach einem der vorhergehenden Ansprüche, dadurch gekennzeichnet, daß jeder Schenkel der Bögen (9; 22) wenigstens zwei Zähne (5a, 5b - 6a, 6b/ 27a, 27b - 28a, 28b) enthält, die in Umfangsrichtung aufeinanderfolgend angeordnet und durch einen Zahnhohlraum (51) getrennt sind.

12. Maschine nach Anspruch 11, dadurch gekennzeichnet, daß die Länge (La) eines Bogens entlang der Richtung (X) der Krümmungsachse dieses Bogens konstant ist und daß die Anzahl (Nd) der Zahnpaare pro Bogen, die Anzahl (Na) der einen Magnetkreis bildenden Bögen, die Länge (La) eines Bogens, der Luftspaltradius (Re) und das Zahnzyklusverhältnis (Rk) im wesentlichen die folgenden Bedingungen erfüllen:

$$La = 2 \cdot \pi \cdot Re \cdot (Nd + Rk - 1) / Nd \cdot Na$$
$$0,34 < Rk < 0,46$$

13. Maschine nach einem der vorhergehenden Ansprüche, dadurch gekennzeichnet, daß die Zahnzyklusverhältnisse (Rks, Rkr) des Statormagnetkreises (1) und des Rotormagnetkreises (21) unterschiedlich sind (Rks>Rkr) und daß die Winkel ($\alpha_r$) zwischen benachbarten Bögen des das kleinste Zahnzyklusverhältnis (Rkr) besitzenden Magnetkreises (21) sich zwischen solchen Grenzen verändern, daß es gleichzeitig nicht vorkommt, daß es einen geschlossenen Luftspalt gibt, der sich gerade öffnet, und einen anderen Luftspalt, der sich gerade schließt.

14. Maschine nach einem der vorhergehenden Ansprüche, wobei jeder Zahn eine Vorderkante (52) besitzt, dadurch gekennzeichnet, daß die Vorderkanten (52) jedes benachbarten Paares von Stator- und Rotorzähnen (5-27, 6-28) zwischen sich einen kleinen Winkel einschließen.

15. Maschine nach einem der vorhergehenden Ansprüche, dadurch gekennzeichnet, daß jeder Rotorbogen (22) eine Richtung der Krümmungsachse (X) besitzt, die bezüglich einer zur Rotationsachse (Z) senkrechten Ebene leicht geneigt ist.

16. Maschine nach einem der vorhergehenden Ansprüche, dadurch gekennzeichnet, daß sie Gruppen (73, 74) nebeneinander angeordneter Strukturen (A, B, C ...) enthält, wobei jede Gruppe eine gleiche Anzahl von Zähnen (Nd·Na) pro Struktur besitzt und wobei eine Gruppe eine Anzahl von Zähnen (Nd·Na) besitzt, die von der Anzahl der Zähne der anderen Gruppen verschieden ist.

17. Maschine nach einem der vorhergehenden Ansprüche, dadurch gekennzeichnet, daß jeder Bogen im Steg (4) des U ein Loch (57) enthält, durch das ein Befestigungsmittel führt.

18. Maschine nach einem der vorhergehenden Ansprüche, wobei der den Zähnen (5, 6; 27, 28) entgegengesetzte Abschnitt eines Bogens einen Bogenrücken bildet, dadurch gekennzeichnet, daß ein Bogen (9, 22) auf seinem Rücken mit einem individuellen Formteil (67) versehen ist, das im Zahnhohlraum (30, 51) verankert ist und dessen äußere Form sich für eine kranzförmige Zusammenfügung eignet.

19. Verfahren zum Herstellen von Bögen (9, 22) eines Magnetkreises, insbesondere für eine Maschine nach einem der vorhergehenden Ansprüche, dadurch gekennzeichnet, daß man durch Wickeln und Kleben eines Streifens mit konstanter Breite aus einem Magnetblech (T) einen Ring (29) bildet und dann den Ring in zwei voneinander in Umfangsrichtung beabstandeten Bereichen so zerschneidet, daß zwei Bögen (9; 9, 22) erhalten werden.

20. Verfahren nach Anspruch 19, dadurch gekennzeichnet, daß das Zerschneiden des Ringes (29) mittels einer Elektroerosionsvorrichtung (53) mit einem Draht ausgeführt wird, die man so programmiert, daß sie einem Zahnprofil folgt, während sie im wesentlichen zur Richtung (X) der Krümmungsachse des Ringes (29) senkrecht bleibt.

21. Verfahren nach Anspruch 20, dadurch gekennzeichnet, daß das Zerschneiden gleichzeitig an mehreren Ringen (29) ausgeführt wird, von denen eine Seite, die von einer Kante des Magnetblechs definiert ist, gegen eine parallel zum Draht (52) angeordnete Elektrode (54) gedrückt wird, die einen Einschnitt (55) besitzt, in dem sich der Draht an einem der Schnittenden befindet.

A    B    C

10  56  59  6b  3  X  57  8  2  5b  33  4  7  32  9

66    28b    27b    63

Re

+    +

1

34

21

22

62

64

60

20

50

Z

FIG_1

10    La    8  58    56    9/2    61    32

9/1

1

57

6c
6b
6a

Ha

21
28a
28b
28c

22/1    α=15°    22/2    51

62

Z

15

X

FIG_2

FIG.4

FIG.5

FIG.3

FIG.6

FIG.7

FIG_8

FIG_10

FIG_9

FIG_11

FIG_12